# EUROPEAN PATENT SPECIFICATION

(11) **EP 4 033 801 B1**
(45) Date of publication and mention of the grant of the patent: **04.11.2026**
(21) Application number: 19945874.6
(22) Date of filing: 20.09.2019
(51) Int. Cl.: H04W 24/10, H04B 7/06, H04L 5/00, H04B 7/08

(54) **WEIGHTED LAYER 1 RECEPTION QUALITY REPORTING IN RADIO COMMUNICATION SYSTEMS**
GEWICHTETE SCHICHT-1-EMPFANGSQUALITÄTSMELDUNG IN FUNKKOMMUNIKATIONSSYSTEMEN
RAPPORT DE QUALITÉ DE RÉCEPTION DE COUCHE 1 PONDÉRÉE DANS DES SYSTÈMES DE COMMUNICATION RADIO

(43) Date of publication of application: 27.07.2022
(73) Proprietor: NTT DOCOMO, INC., Chiyoda-ku Tokyo 100-6150 (JP)
(72) Inventor: HASHIMOTO, Eina, Tokyo 100-6150 (JP); TAKEDA, Kazuaki, Tokyo 100-6150 (JP); KAWANA, Akihiro, Tokyo 100-6150 (JP); MIN, Tianyang, Tokyo 100-6150 (JP)
(74) Representative: Hoffmann Eitle
(86) International application number: PCT/JP2019/037079
(87) International publication number: WO 2021/053825

(56) References cited:
- WO-A1-2018/232090
- JP-A- 2019 062 506
- NOKIA ET AL: "CSI-RS and SSB L1 RSRP for beam management", vol. RAN WG4, no. Gothenburg, Sweden; 20180820 - 20180824, 10 August 2018 (2018-08-10), XP051580210, Retrieved from the Internet <URL:http://www.3gpp.org/ftp/tsg%5Fran/WG4%5FRadio/TSGR4%5F88/Docs/R4%2D1811311%2Ezip> [retrieved on 20180810]
- ZTE: "Details and SLS evaluation on L1-SINR measurement and reporting", vol. RAN WG1, no. Reno, USA; 20190513 - 20190517, 13 May 2019 (2019-05-13), XP051727702, Retrieved from the Internet <URL:http://www.3gpp.org/ftp/Meetings%5F3GPP%5FSYNC/RAN1/Docs/R1%2D1906249%2Ezip> [retrieved on 20190513]
- NTT DOCOMO, INC.: "Remaining issues on Ll-RSRP Computation for reporting", 3GPP TSG RAN WG4 #88BIS R4-1812711, 12 October 2018 (2018-10-12), XP051581423
- NTT DOCOMO, INC.: "Discussion on CSI-RS Ll-RSRP measurement in immediate MDT", 3GPP TSG RAN WG2 #106 R2-1907804, 17 May 2019 (2019-05-17), XP051712078
- NOKIA, NOKIA SHANGHAI BELL: "NR Ll-RSRP measurements and Reporting", 3GPP TSG RAN WG4 #89 R4-1815435, 16 November 2018 (2018-11-16), XP051484067

## Description

### TECHNICAL FIELD

The present invention relates to a terminal that performs radio communication, and particularly to a terminal that transmits a reception quality of a reference signal.

### BACKGROUND ART

The 3rd generation partnership project (3GPP) specifies Long Term Evolution (LTE) and specifies LTE-Advanced (hereinafter, collectively referred to as LTE) for the purpose of further speeding up LTE. In addition, in the 3GPP, specification of a succession system of LTE called 5G, new radio (NR), or the like, has been studied.

When receiving a reference signal for measurement (for example, a channel state information reference signal (CSI-RS)), a terminal measures a reception quality such as a reference signal received power (RSRP).

The 3GPP specifies that a reception quality such as a reference signal received power (hereinafter, L3 RSRP) processed in layer 3 of the terminal, is recorded as trace information used for quality analysis of a network and the like (see Non-Patent Document 1).

For example, a communication node (for example, radio base station) transmits the L3 RSRP, which is reported from the terminal, to a trace collection entity (hereinafter, TCE), so that the TCE can acquire the trace information.

### PRIOR ART DOCUMENT

"CSI-RS and SSB L1 RSRP for beam management" (NOKIA ET AL), 3GPP DRAFT, R4-1811311, 10 August 2018 (2018-08-10), relates to CSI-RS for L1-RSRP measurements and reporting. In particular, regarding L1-RSRP measurement accuracy, it is disclosed that the number of RS available per measurement instant (measurement sample) affects the measurement accuracy. A proposal is raised that UE time domain averaging for L1-RSRP measurements (if any) shall be well defined by RAN4.

"Details and SLS evaluation on L1-SINR measurement and reporting" (ZTE), 3GPP DRAFT, R1-1906249, 13 May 2019 (2019-05-13), discusses L1-SINR measurement and reporting, involving L1-RSRP, L1-SINR without IMR index(es) to be reported and L1-SINR with IMR index(es) to be reported. Regarding interference beams, SINR measurements in beam management is within a measurement window.

### NON-PATENT DOCUMENT

Non-Patent Document 1: 3GPP TS 32.422 V15.2.0 3rd Generation Partnership Project; Technical Specification Group Services and System Aspects; Telecommunication management; Subscriber and equipment trace; Trace control and configuration management (Release 15), 3GPP, June, 2019 WO2018/232090 A1 discloses the measurements of CSI-RS and layer-1 filtering, meaning that time domain averaging is performed with multiple samples. In addition, weighted coefficients can be used for different RS.

### SUMMARY OF THE INVENTION

In the terminal, the reference signal received power (RSRP) is processed in layer 1 in addition to the layer 3.

A reporting cycle of a reference signal received power (hereinafter, L1 RSRP) processed in the layer 1 of the terminal, is shorter than that of the L3 RSRP.

Therefore, it is considered that the communication node transmits the L1 RSRP, which is reported from the terminal, to the TCE, so that the TCE can acquire highly accurate trace information.

However, since the L1 RSRP is reported from the terminal at a high frequency, when the communication node directly transmits the reported L1-RSRP to the TCE, there is a possibility that a processing load of the network increases, which is not preferable.

Therefore, the present invention is made in view of such a situation, and an object of the present invention is to provide a terminal capable of providing highly accurate trace information while avoiding an increase in a processing load of a network.

The present invention is defined by the independent claims. Preferred embodiments are defined by the dependent claims. Further aspects are provided for facilitating the understanding of the invention.

### BRIEF DESCRIPTION OF DRAWINGS

Fig. 1 is an overall schematic configuration diagram of a radio communication system 10.
Fig. 2 is a functional block configuration diagram of a terminal 200.
Fig. 3 is a functional block configuration diagram of each of communication nodes 100a and 100b.
Fig. 4 is a diagram explaining an example of beam sweeping using wide beams in beam control.
Fig. 5 is a diagram explaining an example of beam sweeping using narrow beams in the beam control.
Fig. 6 is a diagram explaining an example of beam sweeping using narrow beams in the beam control.
Fig. 7 is a diagram illustrating a transmission sequence (operation example 1) in provision of trace information.
Fig. 8 is a diagram explaining an example of an average of layer 1 reception qualities of a reference signal in the operation example 1.
Fig. 9 is a diagram explaining an example of an average of layer 1 reception qualities of a reference signal in the operation example 1.
Fig. 10 is a diagram illustrating a transmission sequence (operation example 2) in provision of trace information.
Fig. 11 is a diagram explaining an example of an average of layer 1 reception qualities of a reference signal in operation example 2.
Fig. 12 is a diagram illustrating a transmission sequence (operation example 3) in provision of trace information.
Fig. 13 is a diagram illustrating an example of a hardware configuration of communication nodes 100a and 100b and a terminal 200. The invention corresponds to the embodiment of Figure 7. Other embodiments are not encompassed by the wording of the claims but are considered as useful for understanding the invention

### MODES FOR CARRYING OUT THE INVENTION

Hereinafter, embodiments will be described with reference to the drawings. Note that the same functions and configurations are denoted by the same or similar reference numerals, and description thereof is omitted as appropriate.

### (1) Overall Schematic Configuration of Radio Communication System

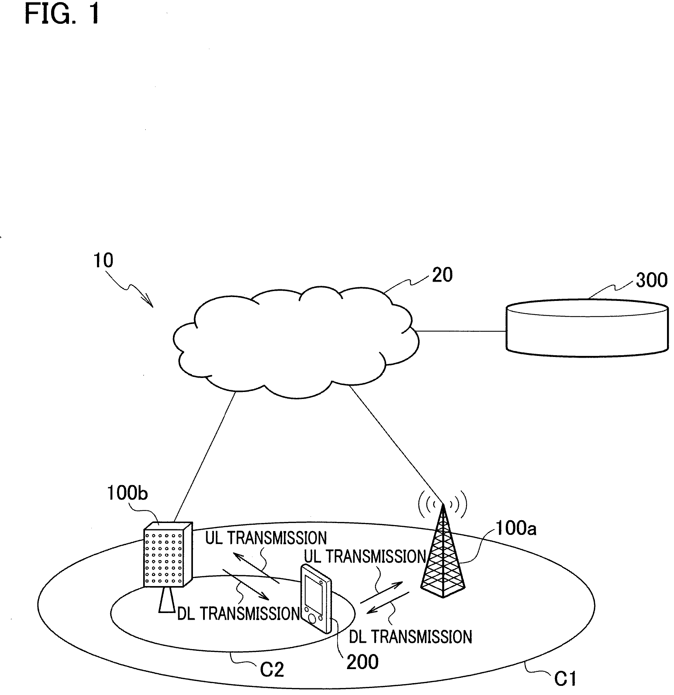

Fig. 1 is an overall schematic configuration diagram of a radio communication system 10 according to the present embodiment. The radio communication system 10 is a radio communication system according to 5G (NR).

As illustrated in Fig. 1, the radio communication system 10 includes a core network (5G-CN) 20, communication nodes 100a and 100b, a terminal 200, and a trace collection entity (TCE) 300. The terminal is also called user equipment (UE). The TCE is also called a data server. Note that a specific configuration of the radio communication system 10 that includes the number of communication nodes and terminals is not limited to the example illustrated in Fig. 1.

Each of the communication nodes 100a and 100b is a gNB or an ng-eNB, and is included in a next generation-radio access network (NG-RAN, not illustrated). The NG-RAN is connected to the 5G-CN 20 according to NR. Note that the NG-RAN and the 5G-CN 20 may be simply expressed as a network.

The communication nodes 100a and 100b perform radio communication according to NR between the communication nodes 100a and 100b and the terminal 200.

At least one of the communication nodes 100a and 100b manages a control plane connected to the 5G-CN 20. A protocol stack for the control plane includes a physical (PHY) layer, a media access control (MAC) layer, a radio link control (RLC) layer, a packet data convergence protocol (PDCP) layer, a radio resource control (RRC) layer, and a non-access (NAS) layer.

Each of the communication nodes 100a and 100b manages a user plane connected to the 5G-CN 20. A protocol stack for the user plane includes the PHY layer, the MAC layer, the RLC layer, the PDCP layer, and a service data adaptation protocol (SDAP) layer.

Each of the protocol stack for the control plane and the protocol stack for the user plane is classified into layers 1 to 3 of an Open Systems Interconnection (OSI) reference model. The layer 1 includes the PHY layer. The layer 2 includes the MAC layer, the RLC layer, the PDCP layer, and the SDAP layer. The layer 3 includes the RRC layer and the NAS layer.

Further, the communication nodes 100a and 100b form cells C1 and C2, respectively. The cell C2 is within coverage of the cell C1. Note that the cell C1 can be within coverage of the cell C2. In the present embodiment, the communication node 100b includes a plurality of antenna elements.

The communication nodes 100a and 100b and the terminal 200 can support Massive MIMO in which a more highly directional beam is generated by controlling radio signals transmitted from a plurality of antenna elements, Carrier Aggregation (CA) in which a plurality of component carriers (CCs) is bundled to be used, Dual Connectivity (DC) in which communication is simultaneously performed between the terminal and each of the two NG-RAN nodes, and the like. Note that the CC is also called a carrier.

In the present embodiment, as described later, the terminal 200 acquires an average or statistical information of layer 1 reception qualities of a reference signal, the layer 1 reception qualities being measured within a specified measurement period. The terminal 200 transmits the acquired average or statistical information to the communication node 100a or the communication node 100b. Examples of the reference signal include a channel state information reference signal (CSI-RS), a synchronization signal and broadcast channel block (SSB), a demodulation reference signal (DM-RS), a sounding reference signal (SRS), and the like.

The "layer 1 reception quality of a reference signal" is also called "reception quality of a reference signal not processed in the layer 3". In addition, the "average of layer 1 reception qualities of a reference signal" is also called "smoothing of layer 1 reception qualities of a reference signal".

Note that, instead of the terminal 200, the communication node 100a or the communication node 100b can receive, from the terminal 200, a layer 1 reception quality of a reference signal, and can acquire an average or statistical information of layer 1 reception qualities of the reference signal, the layer 1 reception qualities being received within the specified reporting period.

The TCE 300 is connected to the communication node 100a and the communication node 100b via the 5G-CN 20. The TCE 300 stores, as trace information, the average or the statistical information of the layer 1 reception qualities of the reference signal which is transmitted from the communication node 100a or the communication node 100b. The TCE 300 can store resource information of a reference signal transmitted from the communication node 100a or the communication node 100b as the trace information.

Note that the radio communication system 10 can include an evolved universal terrestrial radio access network (E-UTRAN) instead of the NG-RAN. In this case, each of the communication nodes 100a and 100b is an eNB or an en-gNB and is included in the E-UTRAN. The E-UTRAN is connected to a core network (EPC) according to LTE. In this case, the E-UTRAN and the EPC may be simply expressed by a network.

### (2) Functional Block Configuration of Radio Communication System

Next, the functional block configuration of the radio communication system 10 will be described. Specifically, functional block configurations of the communication nodes 100a and 100b and the terminal 200 will be described. Hereinafter, only portions related to the features in the present embodiment will be described. Therefore, the communication nodes 100a and 100b and the terminal 200 also include other functional blocks that are not directly related to the features in the present embodiment.

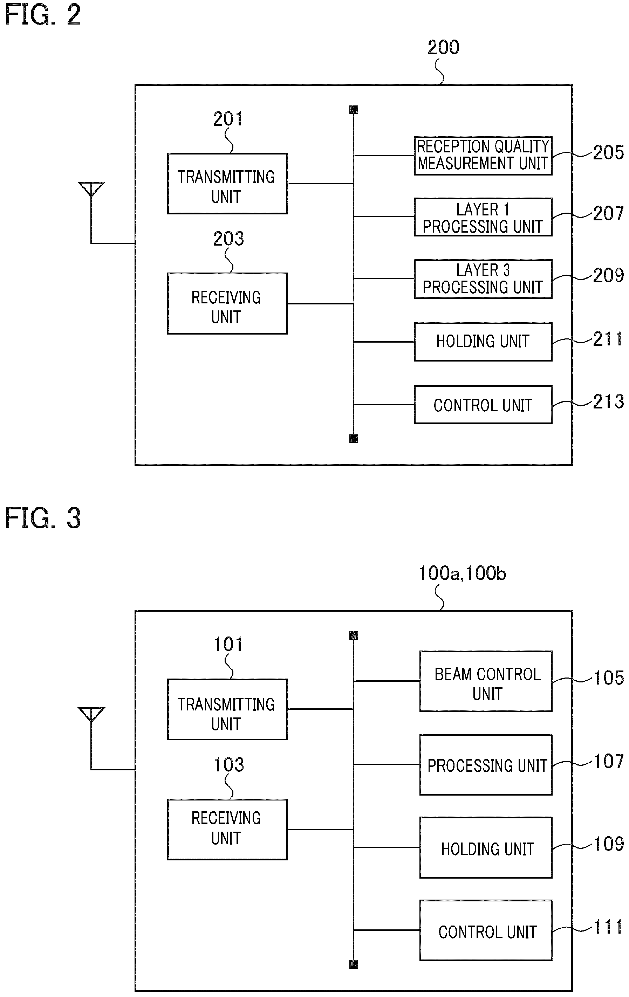

For convenience, the functional block configuration diagram of the terminal 200 will be described first. Fig. 2 is a functional block configuration diagram of the terminal 200. As illustrated in Fig. 2, the terminal 200 includes a transmitting unit 201, a receiving unit 203, a reception quality measurement unit 205, a layer 1 processing unit 207, a layer 3 processing unit 209, a holding unit 211, and a control unit 213.

The transmitting unit 201 transmits an uplink signal (UL signal) according to NR. The receiving unit 203 receives a downlink signal (DL signal) according to NR. Specifically, the transmitting unit 201 and the receiving unit 203 executes radio communication between the communication nodes 100a and 100b and the terminal 200 via a physical uplink control channel (PUCCH), a physical uplink shared channel (PUSCH), a physical downlink control channel (PDCCH), a physical downlink shared channel (PDSCH), a physical random access channel (PRACH), or the like.

The transmitting unit 201 uses a layer 1 signal to transmit a layer 1 reception quality of a reference signal to the communication node 100a or the communication node 100b. The transmitting unit 201 uses a layer 3 signal to transmit a layer 3 reception quality of a reference signal to the communication node 100a or the communication node 100b.

The transmitting unit 201 uses the layer 1 signal to transmit an average or statistical information of layer 1 reception qualities of a reference signal to the communication node 100a or the communication node 100b.

The receiving unit 203 receives an SSB within the specified measurement period. The receiving unit 203 receives a reference signal within the specified measurement period.

The reception quality measurement unit 205 measures a reception quality of an SSB. The reception quality measurement unit 205 measures a reception quality of a reference signal. The reception quality measurement unit 205 measures, as the reception quality, a reference signal received power (RSRP), a reference signal received quality (RSRQ), a signal-to-interference-plus-noise ratio (SINR), or the like. Note that a reception quality to be measured is notified from the network by an RRC message.

The layer 1 processing unit 207 processes, in the layer 1, the reception quality of the reference signal measured by the reception quality measurement unit 205 to acquire a layer 1 reception quality of the reference signal .

The layer 3 processing unit 209 processes, in the layer 3, the reception quality of the SSB measured by the reception quality measurement unit 205 to acquire a layer 3 reception quality of the SSB . The layer 3 processing unit 209 processes, in the layer 3, the reception quality of the reference signal measured by the reception quality measurement unit 205 to acquire a layer 3 reception quality of the reference signal.

The holding unit 211 holds the layer 1 reception quality of the reference signal acquired by the layer 1 processing unit 207.

The control unit 213 controls each functional block included in the terminal 200.

The control unit 213 acquires an average or statistical information of the layer 1 reception qualities of the reference signal which are measured within the specified measurement period, using reception qualities held in the holding unit 211. The control unit 213 acquires any of the average and the statistical information of the layer 1 reception qualities of the reference signal according to an instruction from the network.

As will be described later, examples of the average of the layer 1 reception qualities of the reference signal include an arithmetic average, a geometric average, a weighted average, and the like. As will be described later, examples of the statistical information of the layer 1 reception qualities of the reference signal include a statistical amount including a combination of an average, a variance, and a standard deviation.

When the control unit 213 acquires a weighted average of the layer 1 reception qualities of the reference signal, weighting coefficients are set so that a weighting coefficient applied to a reception quality measured at a timing close to a transmission timing of the weighted average is greater than a weighting coefficient applied to a reception quality measured at a timing far from the transmission timing.

When the receiving unit 203 repeatedly receives a plurality of different reference signals within the specified measurement period, the control unit 213 acquires an average or statistical information of layer 1 reception qualities of a reference signal for each identical reference signal.

In this case, the control unit 213 can determine an average or statistical information indicating a best quality among averages or plural pieces of statistical information of the plurality of different reference signals. The control unit 213 instructs the transmitting unit 201 to transmit the determined average or statistical information to the communication node 100a or the communication node 100b.

Fig. 3 is a functional block configuration diagram of the communication nodes 100a and 100b. As illustrated in Fig. 3, each of the communication nodes 100a and 100b includes a transmitting unit 101, a receiving unit 103, a beam control unit 105, a processing unit 107, a holding unit 109, and a control unit 111.

The transmitting unit 101 transmits the SSB and the reference signal to the terminal 200. In the present embodiment, the communication node 100b performs the transmission.

The transmitting unit 101 transmits, as the trace information of the terminal 200, the average or the statistical information of the layer 1 reception qualities of the reference signal to the TCE 300 at a predetermined timing.

The receiving unit 103 receives the layer 1 reception quality of the reference signal from the terminal 200. The receiving unit 103 receives the average or the statistical information of the layer 1 reception qualities of the reference signal from the terminal 200. The receiving unit 103 receives the layer 3 reception quality of the reference signal from the terminal 200.

When receiving a layer 1 reception quality of a CSI-RS from the terminal 200 as the layer 1 reception quality of the reference signal, the receiving unit 103 can also receive resource information of the CSI-RS from the terminal 200.

The beam control unit 105 performs beamforming in beam control. When applying the beamforming in the beam control, the beam control unit 105 transmits a plurality of SSBs using different wide beams and transmits a plurality of reference signals using different narrow beams. In the present embodiment, the communication node 100b performs the beam control.

When the receiving unit 103 receives layer 3 reception qualities of the SSBs in the beam control, the processing unit 107 specifies an SSB with the highest layer 3 reception quality within the specified reporting period, and identifies a wide beam used for the transmission of the SSB.

When the receiving unit 103 receives layer 1 reception qualities of the reference signals in the beam control, the processing unit 107 specifies a reference signal with the highest layer 1 reception quality within the specified reporting period, and identifies a narrow beam used for the transmission of the reference signal.

The holding unit 109 holds the layer 1 reception quality of the reference signal received from the terminal 200. When receiving the layer 1 reception quality of the CSI-RS from the terminal 200 as the layer 1 reception quality of the reference signal, the holding unit 109 can also hold resource information of the CSI-RS.

The control unit 111 controls each functional block included in each of the communication nodes 100a and 100b.

The control unit 111 acquires the average or the statistical information of the layer 1 reception qualities of the reference signal which are reported within the specified reporting period, using reception qualities held in the holding unit 109. The control unit 111 acquires any of the average and the statistical information of the layer 1 reception qualities of the reference signal according to an instruction from the network.

As described above, examples of the average of the layer 1 reception qualities of the reference signal include the arithmetic average, the geometric average, the weighted average, and the like. Examples of the statistical information of the layer 1 reception qualities of the reference signal include a statistical amount including a combination of an average, a variance, and a standard deviation.

When receiving the layer 1 reception quality of the CSI-RS and the resource information of the CSI-RS from the terminal 200, the control unit 111 can instruct the transmitting unit 201 to transmit the resource information of the CSI-RS to the TCE 300 as the trace information of the terminal 200 at a predetermined timing. Further, in this case, the control unit 111 can instruct the transmitting unit 201 to transmit to the TCE 300, information on the narrow beam, which is used to transmit the CSI-RS, instead of the resource information of the CSI-RS.

### (3) Operation of Radio Communication System

Next, an operation of the radio communication system 10 will be described. Specifically, the beam control by the communication node will be described, and then the provision of the trace information in the beam control will be described. Note that it is not limited that the trace information is provided in the beam control, and the trace information can be provided in a link failure, for example.

Further, in the present embodiment, the communication node 100a, the communication node 100b, or the terminal 200 acquires the average or the statistical information of the layer 1 reception qualities of the CSI-RS, but the present embodiment is not limited thereto. For example, the communication node 100a, the communication node 100b, or the terminal 200 can acquire an average or statistical information of layer 1 reception qualities of a DM-RS, an SRS, or the like.

### (3.1) Beam Control

In the present embodiment, the communication node 100b includes a plurality of antenna elements, and can apply the beamforming to secure coverage of the cell C2 by using a plurality of beams. The communication node 100b establishes a beam pair between the communication node 100b and the terminal 200, and performs beam control to transmit and receive a radio signal between the communication node 100b and the terminal 200.

When applying the beamforming in the beam control, the communication node 100b first transmits a plurality of SSBs using different wide beams.

Note that there are three types of beamforming: analog beamforming, digital beamforming, and hybrid beamforming. In the analog beamforming, one beam is transmitted every time. In the digital beamforming, a plurality of orthogonalized beams are transmitted every time. The hybrid beamforming transmits beams by combination of the analog beamforming and the digital beamforming.

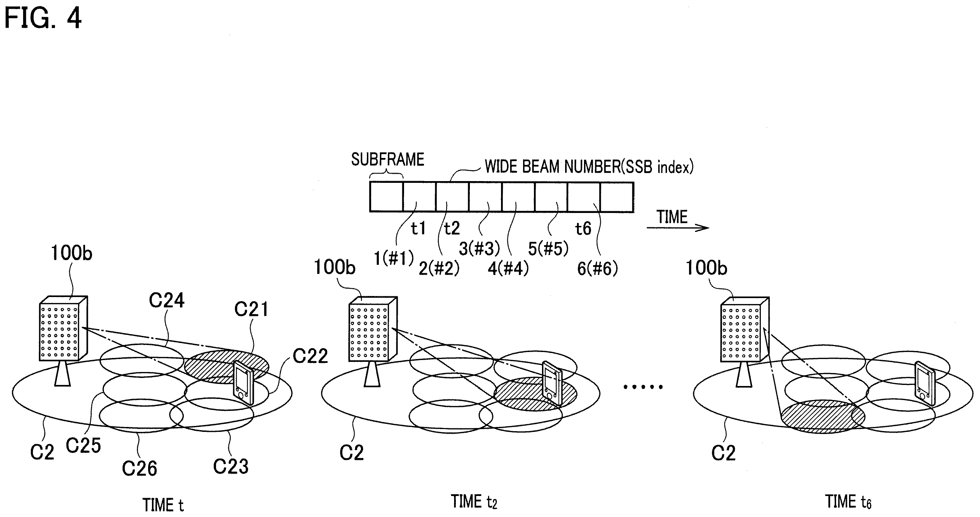

Fig. 4 is a diagram explaining an example of beam sweeping using wide beams in the beam control. As illustrated in Fig. 4, the communication node 100b applies the analog beamforming, sequentially switches wide beams every time, and transmits different wide beams to areas C21 to C26 in the cell C2. In the present embodiment, the terminal 200 resides in the area C22 in the cell C2.

Specifically, the communication node 100b sequentially switches wide beams 1 to 6 for each subframe and repeatedly transmits different wide beams to the areas C21 to C26 in the cell C2. The wide beams 1 to 6 are transmitted to the areas C21 to C26 in the cell C2, respectively.

The communication node 100b uses the wide beams 1 to 6 to transmit a plurality of SSBs. SSB indexes #1 to #6 are allocated to the plurality of SSBs. The communication node 100b associates each SSB (specifically, SSB index) with a wide beam used for transmitting the SSB.

Note that the number of wide beams is not limited to six. Further, a time interval in which one beam is transmitted is not limited to one subframe, and may be, for example, one slot corresponding to a subcarrier spacing.

When receiving an SSB, the terminal 200 measures a reception quality of the SSB and acquires an SSB index included in the SSB. Examples of the reception quality of the SSB include the RSRP, the RSRQ, the SINR, and the like. The terminal 200 processes, in the layer 3, the reception quality of the measured SSB to acquire a layer 3 reception quality of the SSB. Examples of the processing in the layer 3 include L3 filtering and the like.

The terminal 200 uses the layer 3 signal to report the layer 3 reception quality of the SSB and the SSB index included in the SSB, to the communication node 100b. Note that the terminal 200 can report an identifier (Cell ID) of the cell, in which the terminal 200 resides, to the communication node 100b, in addition to the layer 3 reception quality of the SSB and the SSB index included in the SSB.

Instead of measuring the reception quality of the SSB, the terminal 200 can measure a reception quality of a CSI-RS transmitted using a wide beam according to an instruction from the communication node 100b. In this case, the terminal 200 processes, in the layer 3, a reception quality of the measured CSI-RS to acquire a layer 3 reception quality of the CSI-RS. The terminal 200 uses the layer 3 signal to report the layer 3 reception quality of the CSI-RS and resource information of the CSI-RS, to the communication node 100b.

When receiving layer 3 reception qualities of SSBs and SSB indexes included in the SSBs from the terminal 200, the communication node 100b specifies an SSB index allocated to an SSB with the highest layer 3 reception quality within a specified period. The communication node 100b identifies a wide beam associated with the specified SSB index. In this way, the communication node 100b can grasp the area in which the terminal 200 resides.

In the present embodiment, the communication node 100b specifies the SSB index #2 allocated to the SSB with the highest layer 3 reception quality, and identifies the wide beam 2 associated with the SSB index #2. In this way, the communication node 100b can grasp that the terminal 200 resides in the area C22.

Note that, instead of the communication node 100b, the terminal 200 can specify an SSB index allocated to an SSB with the highest layer 3 reception quality within a certain period. In this case, the terminal 200 reports the layer 3 reception quality of the SSB and the SSB index to the communication node 100b.

Next, the communication node 100b transmits a plurality of CSI-RSs using different narrow beams that correlate with the identified wide beam to grasp a position of the terminal 200 within the grasped area. Note that the communication node 100b notifies the terminal 200 of resource information of each CSI-RS used for transmitting each CSI-RS before transmitting the plurality of CSI-RSs.

In a case where the communication node 100b applies the analog beamforming and uses the narrow beams to transmit the plurality of CSI-RSs, the resource information of each CSI-RS includes resource elements (time and frequency) allocated to the transmission of each CSI-RS in a resource block.

In a case where the communication node 100b applies the digital beamforming and uses the narrow beams to transmit the plurality of CSI-RSs, the resource information of each CSI-RS includes resource elements (time and frequency) allocated to the transmission of each CSI-RS in a resource block and codes used to orthogonalize a plurality of narrow beams.

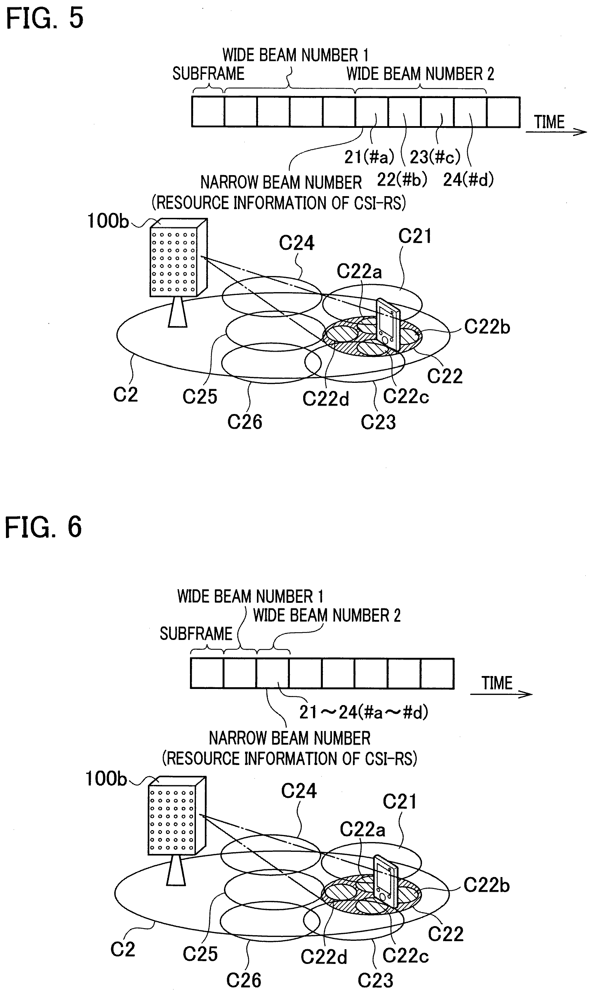

Fig. 5 is a diagram explaining an example of beam sweeping using the narrow beams in the beam control. As illustrated in Fig. 5, the communication node 100b applies the analog beamforming, sequentially switches the narrow beams, which correlate with the identified wide beam 2, every time, and transmits the different narrow beams to spots C22a to C22d in the area C22. In the present embodiment, the terminal 200 is positioned in the spot C22c in the area C22.

Specifically, the communication node 100b sequentially switches narrow beams 21 to 24, which correlate with the wide beam 2, for each subframe and repeatedly transmits the different narrow beams to spots C22a to C22d in the area C22. The narrow beams 21 to 24 are transmitted to the spots C22a to C22d in the area C22, respectively.

The communication node 100b uses the narrow beams 21 to 24 to transmit the plurality of CSI-RSs. Plural pieces of resource information #a to #d of CSI-RSs are allocated to the plurality of CSI-RSs. The communication node 100b associates each CSI-RS (specifically, resource information of each CSI-RS) with a narrow beam used for the transmission of the CSI-RS.

Note that the number of narrow beams is not limited to four. Further, a time interval in which one beam is transmitted is not limited to one subframe, and may be, for example, one slot corresponding to a subcarrier spacing.

Fig. 6 is a diagram explaining an example of beam sweeping using the narrow beams in the beam control. As illustrated in Fig. 6, the communication node 100b applies the digital beamforming, and repeatedly transmits orthogonalized narrow beams 21 to 24, which correlate with the identified wide beam 2, to the spots C22a to C22d in the area C22. The communication node 100b uses the narrow beams 21 to 24 to transmit four CSI-RSs at one time. The communication node 100b associates each CSI-RS (specifically, resource information of each CSI-RS) with a narrow beam used for the transmission of the CSI-RS.

When receiving a CSI-RS by the analog beamforming or the digital beamforming, the terminal 200 measures a reception quality of the CSI-RS. Examples of the reception quality of the CSI-RS include the RSRP, the RSRQ, the SINR, and the like. The terminal 200 processes, in the layer 1, the measured reception quality of the CSI-RS to acquire the layer 1 reception quality of the CSI-RS.

The terminal 200 uses the layer 1 signal to report the layer 1 reception quality of the CSI-RS and resource information of the CSI-RS to the communication node 100b. Note that the terminal 200 can use the layer 1 signal to report the layer 1 reception quality of the CSI-RS and the resource information of the CSI-RS to the communication node 100a.

When receiving layer 1 reception qualities of CSI-RSs and plural pieces of resource information of the CSI-RSs from the terminal 200, the communication node 100b specifies resource information of a CSI-RS with the highest layer 1 reception quality. The communication node 100b identifies a narrow beam associated with the specified resource information of the CSI-RS. In this way, the communication node 100b can grasp a position of the terminal 200 in the area C22.

The communication node 100b uses the identified narrow beam to establish a beam pair between the communication node 100b and the terminal 200, and transmits and receives a radio signal between the communication node 100b and the terminal 200.

In the present embodiment, the communication node 100b uses the narrow beam 23 transmitted to the spot C22c to establish the beam pair between the communication node 100b and the terminal 200, and transmits and receives the radio signal between the communication node 100b and the terminal 200.

Note that the reporting cycle of the layer 1 reception quality of the CSI-RS is shorter than that of the layer 3 reception quality of the SSB or CSI-RS. Therefore, the layer 1 reception quality of the CSI-RS is reported from the terminal 200 to the communication node 100b at a higher frequency than the layer 3 reception quality of the SSB or CSI-RS. In this way, it is possible to follow the movement of the terminal 200, a fluctuation of instantaneous fading, and the like by using the layer 1 reception quality of the CSI-RS.

### (3. 2) Provision of Trace Information

Next, the provision of the trace information in the beam control will be described. The communication node 100a, the communication node 100b, or the terminal 200 acquires the average or the statistical information of the layer 1 reception qualities of the CSI-RS measured within the specified measurement period in the beam control, and transmits the average or the statistical information, as the trace information of the terminal 200, to the TCE 300. This operation will be described in detail below as operation examples 1 to **3.**

Note that the communication node 100a, the communication node 100b, or the terminal 200 acquires either the average or the statistical information of the layer 1 reception qualities of the CSI-RS according to an instruction from the network.

In addition to the above operation, the communication node 100b can transmit, as the trace information of the terminal 200, the layer 3 reception quality of the SSB, which is reported from the terminal 200, to the TCE 300 at a predetermined timing.

### (3.2.1) Operation Example 1

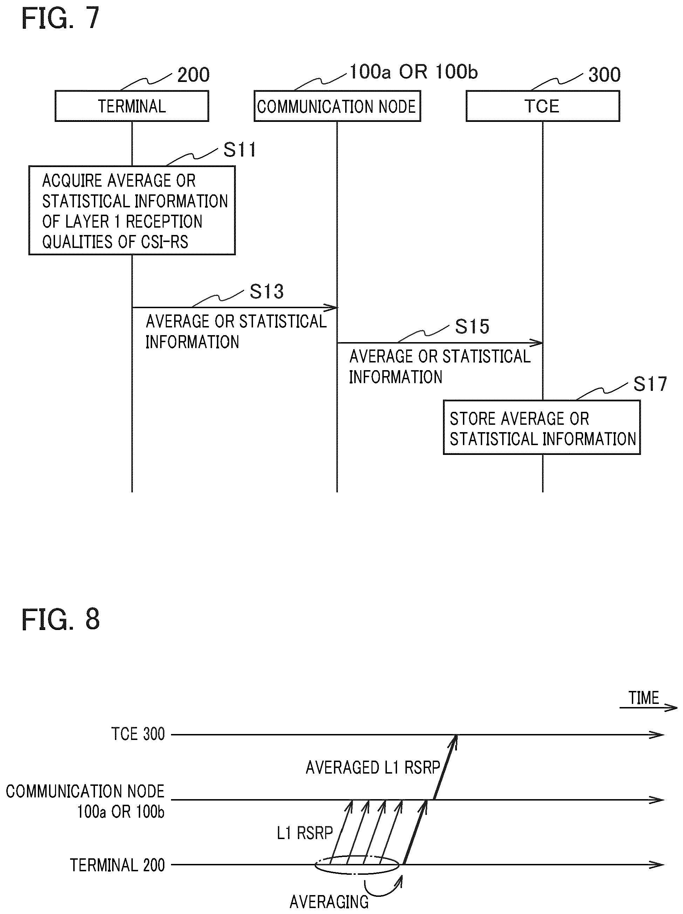

In this embodiment, the terminal 200 acquires the average or the statistical information of the layer 1 reception qualities of the CSI-RS. Fig. 7 is a diagram illustrating a transmission sequence (operation example 1) in the provision of the trace information. As illustrated in Fig. 7, the terminal 200 acquires the average or the statistical information of the layer 1 reception qualities of the CSI-RS which are measured within the specified measurement period in the beam control (S11).

The following is an example of the average of the layer 1 reception qualities of the CSI-RS.
- Arithmetic average
- Geometric average
- Weighted average

In a case of using the arithmetic average, the terminal 200 divides a sum of n layer 1 reception qualities of the CSI-RS by n when the n layer 1 reception qualities of the CSI-RS are measured within the specified measurement period, thereby acquiring the average of the layer 1 reception qualities of the CSI-RS.

In a case of using the geometric average, the terminal 200 calculates an n-th root of a product of n layer 1 reception qualities of the CSI-RS when the n layer 1 reception qualities of the CSI-RS are measured within the specified measurement period, thereby acquiring the average of the layer 1 reception qualities of the CSI-RS.

In the embodiment, in which the weighted average is used, the terminal 200 multiplies each of n layer 1 reception qualities of the CSI-RS by a weighting coefficient when the n layer 1 reception qualities of the CSI-RS are measured within the specified measurement period, thereby acquiring the average of the layer 1 reception qualities of the CSI-RS.

In this case, a weighting coefficient applied to the layer 1 reception quality of the CSI-RS measured at a timing close to the transmission timing of the average to the communication node 100a or the communication node 100b, is greater than that applied to the layer 1 reception quality of the CSI-RS measured at the timing far from the transmission timing.

Examples of the statistical information of the layer 1 reception qualities of the CSI-RS include a statistical amount including a combination of an average, a variance, and a standard deviation.

When the terminal 200 acquires the average or the statistical information of the layer 1 reception qualities of the CSI-RS, the terminal 200 transmits the average or the statistical information to the communication node 100a or the communication node 100b at a predetermined timing (S13). For example, the terminal 200 transmits the average or the statistical information to the communication node 100a or the communication node 100b using the layer 1 signal via the PUCCH or the PUSCH.

The communication node 100a or the communication node 100b uses an RRC message (for example, RRC configuration) to notify the terminal 200 of a timing and a channel for transmitting the average or the statistical information in advance. The average or the statistical information is transmitted in a message different from the layer 1 reception quality of the CSI-RS which is reported to the communication node 100a or the communication node 100b.

When receiving the average or the statistical information from the terminal 200, the communication node 100a or the communication node 100b transmits the average or the statistical information to the TCE 300 at a predetermined timing (S15). When receiving the average or the statistical information from the communication node 100a or the communication node 100b, the TCE 300 stores the average or the statistical information as the trace information of the terminal 200 (S17).

Fig. 8 is a diagram illustrating an example of the average of the layer 1 reception qualities of the reference signal in the operation example 1. In the example illustrated in Fig. 8, the terminal 200 measures the L1 RSRP of the CSI-RS as the layer 1 reception quality of the CSI-RS. As illustrated in Fig. 8, the terminal 200 averages four L1 RSRPs of the CSI-RS measured within the specified measurement period.

The terminal 200 transmits the averaged L1 RSRP to the communication node 100a or the communication node 100b at a predetermined timing. When receiving the averaged L1 RSRP, the communication node 100a or the communication node 100b transmits the averaged L1 RSRP to the TCE 300 at a predetermined timing.

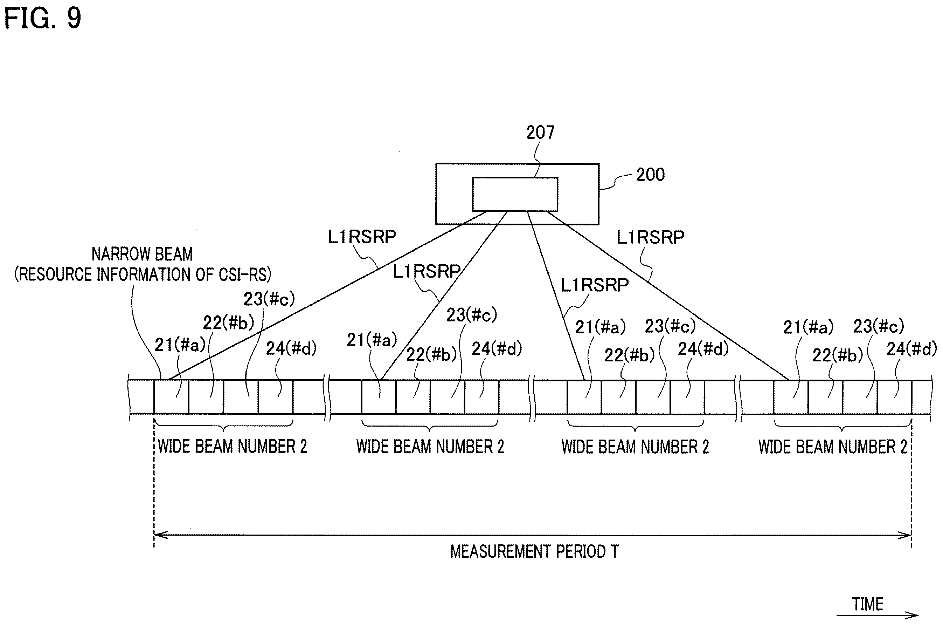

Fig. 9 is a diagram explaining an example of the average of the layer 1 reception qualities of the reference signal in the operation example 1. In the example illustrated in Fig. 9, the terminal 200 measures the L1 RSRPs of the CSI-RS as the layer 1 reception qualities of the CSI-RS. Specifically, the terminal 200 measures the L1 RSRPs of the CSI-RSs transmitted using narrow beams 21 to 24 by applying the analog beamforming.

As illustrated in Fig. 9, the terminal 200 acquires, for each CSI-RS, the average of the L1 RSRPs of the CSI-RS which are measured within a measurement period T. Specifically, the layer 1 processing unit 207 (see Fig. 2) acquires, for each resource of the CSI-RS, the average of the L1 RSRPs of the CSI-RS which are measured within the measurement period T.

Note that Fig. 9 illustrates a state in which the layer 1 processing unit 207 acquires the average of the L1 RSRPs of the CSI-RS which are measured within the measurement period T in resource information #a of the CSI-RS.

The terminal 200 determines an average with the highest value among the acquired averages of the L1 RSRPs of the CSI-RSs, and transmits the determined average to the communication node 100a or the communication node 100b at a predetermined timing.

### (3.2.2) Operation Example 2

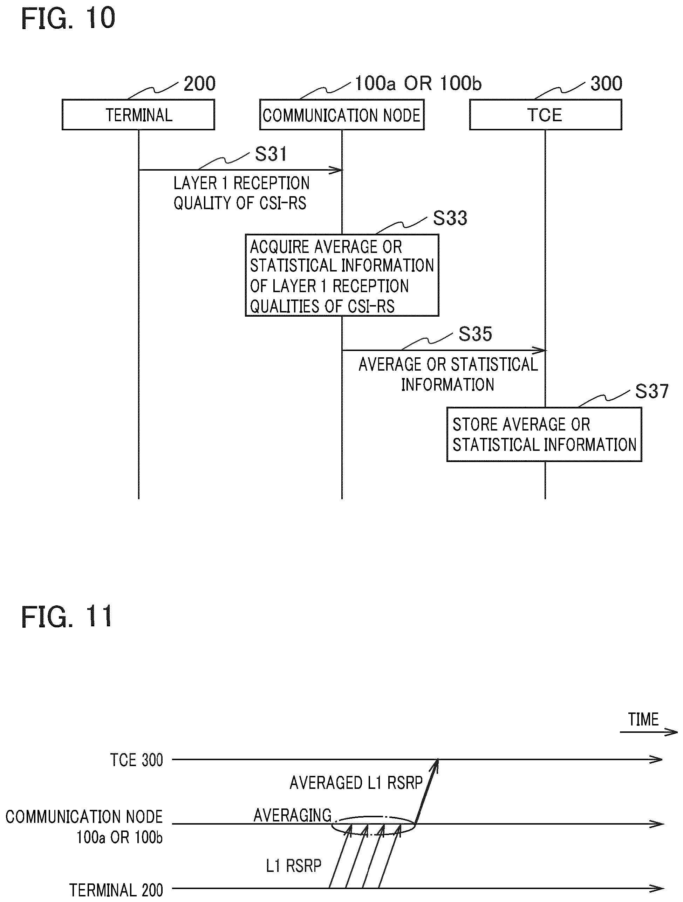

In this operation example, the communication node 100a or the communication node 100b acquires the average or the statistical information of the layer 1 reception qualities of the CSI-RS. Fig. 10 is a diagram illustrating a transmission sequence (operation example 2) in the provision of the trace information. As illustrated in Fig. 10, the terminal 200 uses the layer 1 signal to report the layer 1 reception quality of the CSI-RS and the resource information of the CSI-RS to the communication node 100a or the communication node 100b in the beam control (S31).

The communication node 100a or the communication node 100b acquires the average or the statistical information of the layer 1 reception qualities of the CSI-RS that are reported within the specified reporting period (S33).

Examples of the average of the layer 1 reception qualities of the CSI-RS include the arithmetic average, the geometric average, the weighted average, and the like described above. In addition, examples of the statistical information of the layer 1 reception qualities of the CSI-RS include the statistical amount including the combination of the average, the variance, and the standard deviation described above.

When acquiring the average or the statistical information of the layer 1 reception qualities of the CSI-RS, the communication node 100a or the communication node 100b transmits the average or the statistical information to the TCE 300 at a predetermined timing (S35). When receiving the average or the statistical information from the communication node 100a or the communication node 100b, the TCE 300 stores the average or the statistical information as the trace information of the terminal 200 (S37).

In S33, the communication node 100a or the communication node 100b can decimate the layer 1 reception quality of the CSI RS reported from the terminal 200, instead of acquiring the average or the statistical information of the layer 1 reception qualities of the CSI-RS.

In this case, the communication node 100a or the communication node 100b can transmit, to the TCE 300, a layer 1 reception quality of the CSI-RS which is reported from the terminal 200 immediately before the transmission timing of transmitting the trace information of the terminal 200 to the TCE 300. The transmission timing is specified in advance between the communication node 100a or communication node 100b and the TCE 300.

Fig. 11 is a diagram explaining an example of the average of the layer 1 reception qualities of the reference signal in the operation example 2. In Fig. 11, the terminal 200 reports, as the layer 1 reception quality of the CSI-RS, the L1 RSRP of the CSI-RS to the communication node 100a or the communication node 100b. As illustrated in Fig. 11, the communication node 100a or the communication node 100b averages four L1 RSRPs of the CSI-RS which are reported within the specified reporting period.

When receiving the averaged L1 RSRP, the communication node 100a or the communication node 100b transmits the averaged L1 RSRP to the TCE 300 at a predetermined timing.

Note that the communication node 100a or the communication node 100b can acquire the average of the L1 RSRPs of the CSI-RS which are reported within the specified reporting period for each CSI-RS. Specifically, the processing unit 107 (see Fig. 3) acquires the average of the L1 RSRPs of the CSI-RS which are reported within the specified reporting period for each resource of the CSI-RS reported from the terminal 200.

In addition, the communication node 100a or the communication node 100b specifies an average with the highest value among the acquired averages of the L1 RSRPs of the CSI-RSs, and transmits the determined average to the TCE 300 at a predetermined timing.

### (3.2.3) Operation Example 3

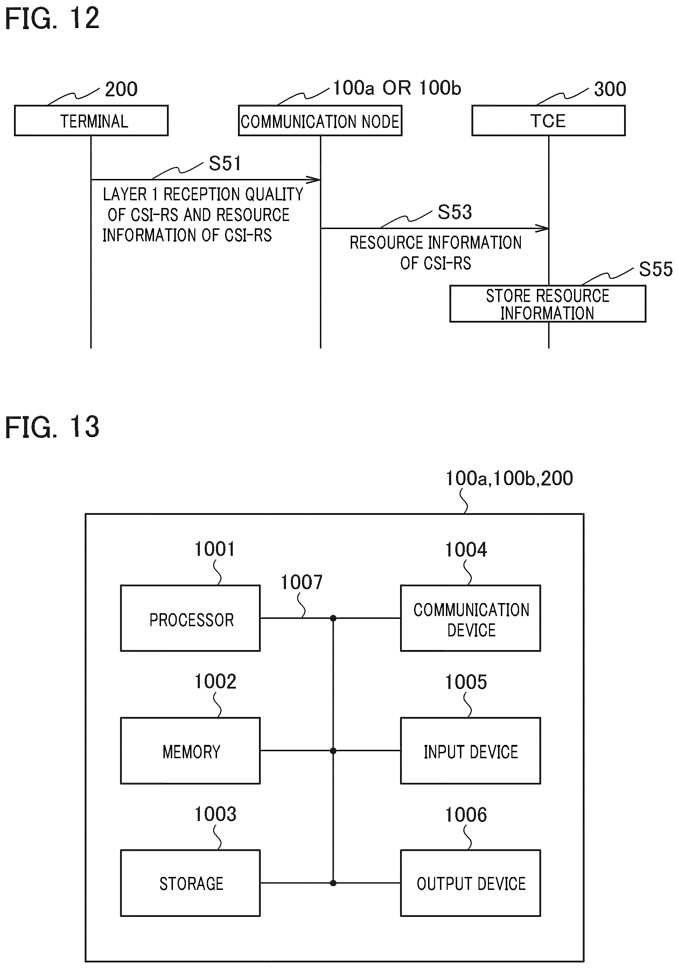

In this operation example, the communication node 100a or the communication node 100b transmits the resource information of the CSI-RS to the TCE 300. Fig. 12 is a diagram illustrating a transmission sequence (operation example 3) in the provision of the trace information. As illustrated in Fig. 12, the terminal 200 uses the layer 1 signal to report the layer 1 reception quality of the CSI-RS and the resource information of the CSI-RS to the communication node 100a or the communication node 100b in the beam control (S51).

The communication node 100a or the communication node 100b transmits, to the TCE 300, resource information of the CSI-RS which is reported from the terminal 200 immediately before the transmission timing of transmitting the trace information of the terminal 200 to the TCE 300 (S53). The transmission timing is specified in advance between the communication node 100a or communication node 100b and the TCE 300.

When receiving the resource information of the CSI-RS from the communication node 100a or the communication node 100b, the TCE 300 stores the resource information of the CSI-RS as the trace information of the terminal 200 (S55). In this case, the association between each resource information of the CSI-RS and the narrow beam used for the transmission of the CSI-RS is shared in advance between the communication node 100a or the communication node 100b and the TCE 300.

Note that when the association is not shared in advance between the communication node 100a or the communication node 100b and the TCE 300, the communication node 100a or the communication node 100b can transmit, to the TCE 300 in S53, the resource information of the CSI-RS and information on the narrow beam used for the transmission of the CSI-RS.

In this way, the position of the terminal 200 can be roughly estimated by referring to the resource information of the CSI-RS stored in the TCE 300 and acquiring the narrow beam used for the transmission of the CSI-RS. In addition, since the communication node 100a or the communication node 100b does not need to acquire the average or the statistical information of the layer 1 reception qualities of the CSI-RS, the processing load of the communication node 100a or the communication node 100b can be reduced.

Note that in S53, the communication node 100a or the communication node 100b can transmit, to the TCE 300, only the information on the narrow beam used to transmit the CSI-RS, as the trace information of the terminal 200, instead of the resource information of the CSI-RS.

### (4) Action and Effect

According to the embodiment described above, the terminal 200 acquires the average or the statistical information of the layer 1 reception qualities of the reference signal, the layer 1 reception qualities being measured within the specified measurement period, and transmits the acquired average or the acquired statistical information to the communication node 100a or 100b.

With such a configuration, the terminal 200 can reduce the number of transmission times of the layer 1 reception quality.

Further, the terminal 200 acquires the average or the statistical information of the layer 1 reception qualities, the layer 1 reception qualities being measured within the specified measurement period, and therefore transmits the highly accurate trace information to the communication node 100a or 100b, in comparison with a case of reducing the number of transmission times of the layer 1 reception quality by decimating the layer 1 reception quality.

Therefore, the terminal 200 can provide highly accurate trace information while avoiding an increase in the processing load of the network.

According to the embodiment described above, the terminal 200 acquires the weighted average of the layer 1 reception qualities, and transmits the acquired weighted average to the communication node 100a or 100b. The weighting coefficient applied to the reception quality measured at the timing close to the transmission timing of the weighted average is greater than that applied to the reception quality measured at the timing far from the transmission timing.

With such a configuration, the ratio of the layer 1 reception quality measured at the timing close to the transmission timing of the weighted average to the layer 1 reception quality measured at the timing far from the transmission timing of the weighted average, increases.

In this way, it is possible to reduce the influence of the layer 1 reception quality measured at the timing far from the transmission timing of the weighted average.

Therefore, the terminal 200 can transmit the highly accurate trace information to the communication node.

According to the embodiment described above, the terminal 200 acquires the average or the statistical information for each reference signal.

With such a configuration, it is possible to avoid acquisition of an average or statistical information of the layer 1 reception qualities of different reference signals. Therefore, the terminal 200 can transmit the highly accurate trace information to the communication node.

According to the embodiment described above, the terminal 200 transmits, to the communication node 100a or 100b, the average or the statistical information indicating the best quality among the averages or the plural pieces of statistical information of the reference signals.

With such a configuration, it is possible to more accurately analyze the position of the terminal 200 or the quality at the position by using the trace information.

### (5) Other Embodiments

Although the contents of the present invention have been described along with the embodiments, the present invention is not limited to these descriptions, and it will be obvious to those skilled in the art that various modifications and improvements can be made thereto.

In the embodiments described above, the terminal 200 is connected to the communication nodes 100a and 100b, but is not limited thereto. For example, the terminal 200 can be connected to only one communication node that manages the control plane and the user plane connected to the 5G-CN 20 or EPC.

The block configuration diagram (Figs. 2 and 3) used for explaining the above-described embodiment illustrates blocks of functional unit. Those functional blocks (structural components) are realized by a desired combination of at least one of hardware and software. A method for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that causes transmitting is called a transmitting unit or a transmitter. For any of the above, as explained above, the realization method is not particularly limited to any one method.

Furthermore, the terminal 200 explained above may function as a computer that performs the processing of the radio communication method of the present disclosure. Fig. 13 is a diagram illustrating an example of a hardware configuration of the terminal. As illustrated in Fig. 13, the terminal can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. A hardware configuration of the device may be constituted by including one or plurality of the devices illustrated in the figure, or may be constituted by without including a part of the devices.

The functional blocks of the device can be realized by any of hardware elements of the computer device or a desired combination of the hardware elements.

Moreover, the processor 1001 performs operation by loading a predetermined software (program) on hardware such as the processor 1001 and the memory 1002, and realizes various functions of the device by controlling communication via the communication device 1004, and controlling at least one of reading and writing of data on the memory 1002 and the storage 1003.

The processor 1001, for example, operates an operating system to control the entire computer. The processor 1001 can be configured with a central processing unit (CPU) including an interface with a peripheral device, a control device, an operation device, a register, and the like.

Moreover, the processor 1001 reads a program (program code), a software module, data, and the like from at least one of the storage 1003 and the communication device 1004 into the memory 1002, and executes various processing according to them. As the program, a program that is capable of executing on the computer at least a part of the operation explained in the above embodiments, is used. Alternatively, various processes explained above may be executed by one processor 1001 or may be executed simultaneously or sequentially by two or more processors 1001. The processor 1001 can be implemented by using one or more chips. Alternatively, the program can be transmitted from a network via a telecommunication line.

The memory 1002 is a computer readable recording medium and may configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main storage device), and the like. The memory 1002 can store therein a program (program codes), software modules, and the like that can execute the method according to the embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including at least one of the memory 1002 and the storage 1003, a server, or other appropriate medium.

The communication device 1004 is hardware (transmission and reception device) capable of performing communication between computers via at least one of a wired network and a wireless network. The communication device 1004 is also called, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information therebetween. The bus 1007 may be constituted by a single bus or may be constituted by separate buses between the devices.

Further, the device may be configured to include hardware such as a microprocessor, a Digital Signal Processor (DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), higher layer signaling (for example, RRC signaling, Medium Access Control (MAC) signaling, broadcast information (Master Information Block (MIB), System Information Block (SIB)), other signals, or a combination of these. The RRC signaling may be called RRC message, for example, or may be RRC Connection Setup message, RRC Connection Reconfiguration message, or the like.

Each of the above aspects/embodiments may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information and signals (information and the like) can be output from a higher layer (or lower layer) to a lower layer (or higher layer). It may be input and output via a plurality of network nodes.

The input and output information can be stored in a specific location (for example, a memory) or may be managed in a management table. The information to be input and output can be overwritten, updated, or added. The information can be deleted after outputting. The inputted information may be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, optical fiber cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

Note that the terms described in the present disclosure and terms necessary for understanding the present disclosure may be replaced by terms having the same or similar meanings. For example, at least one of a channel and a symbol may be a signal (signaling). Also, a signal may be a message. Further, a component carrier (CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, may be expressed as a relative value from a predetermined value, or may be represented by corresponding other information. For example, the radio resource may be instructed by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of at least one of a base station and a base station subsystem that perform the communication service in this coverage.

In the present disclosure, the terms "mobile station (MS)", "user terminal", "user equipment (UE)", "terminal" and the like can be used interchangeably.

The mobile station may be called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), or a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same applies). For example, each of the aspects/embodiments of the present disclosure may be applied to a configuration that allows communication between a base station and a mobile station to be replaced with communication between a plurality of mobile stations (which may be referred to as, for example, Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms such as an uplink channel, a downlink channel, or the like may be read as a side channel.

Likewise, a mobile station in the present disclosure may be read as a base station. In this case, the base station may have the function of the mobile station.

A radio frame may be configured by one or more frames in the time domain. One frame or each of a plurality frames in the time domain may be called a subframe.

Further, the subframe may be configured by one or more slots in the time domain. The subframe may have a fixed time length (for example, 1 ms) that does not depend on numerology.

The numerology may be a communication parameter applied to at least one of transmission and reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by the transceiver in the time domain, and the like.

The slot may be configured by one or more symbols (Orthogonal Frequency Division Multiplexing (OFDM)) symbols, Single Carrier Frequency Division Multiple Access (SC-FDMA) symbols, and the like) in the time domain. The slot may be a time unit based on the numerology.

The slot may include a plurality of minislots. Each minislot may be configured by one or more symbols in the time domain. The minislot may also be called a subslot. The minislot may be configured by fewer symbols than slots. PDSCH (or PUSCH) transmitted in a time unit larger than the minislot may be called a PDSCH (or PUSCH) mapping type A. PDSCH (or PUSCH) transmitted using the minislot may be called a PDSCH (or PUSCH) mapping type B.

Each of the radio frame, the subframe, the slot, the minislot, and the symbol represents a time unit for transmitting a signal. Different names may be used for the radio frame, the subframe, the slot, the minislot, and the symbol, respectively.

For example, one subframe may be called a transmission time interval (TTI), a plurality of consecutive subframes may be called TTI, and one slot or one minislot may be called TTI. That is, at least one of the subframe and TTI may be a subframe (1 ms) in existing LTE, a period shorter than 1 ms (for example, 1-13 symbols), or a period longer than 1 ms. Note that a unit representing TTI may be called a slot, a minislot, or the like instead of the subframe.

Here, TTI refers to a minimum time unit of scheduling in radio communication, for example. For example, in the LTE system, the base station performs scheduling to allocate radio resources (frequency bandwidth, transmission power, and the like that can be used in each user terminal) to each user terminal in units of TTI. Note that a definition of TTI is not limited thereto.

TTI may be a transmission time unit such as a channel-encoded data packet (transport block), a code block, or a code word, or may be a processing unit of scheduling, link adaptation, or the like. Note that when TTI is given, a time interval (for example, the number of symbols) in which a transport block, a code block, a code word, and the like are actually mapped may be shorter than TTI.

Note that when one slot or one minislot is called TTI, one or more TTIs (that is, one or more slots or one or more minislots) may be a minimum time unit of the scheduling. Further, the number of slots (the number of minislots) configuring the minimum time unit of the scheduling may be controlled.

TTI having a time length of 1 ms may be called normal TTI (TTI in LTE Rel. 8-12), normal TTI, long TTI, a normal subframe, a normal subframe, a long subframe, a slot, or the like. TTI shorter than normal TTI may be called shortened TTI, short TTI, partial TTI (partial or fractional TTI), a shortened subframe, a short subframe, a minislot, a subslot, a slot, or the like.

Note that long TTI (for example, normal TTI, subframe, or the like) may be read as TTI having a time length exceeding 1 ms, and short TTI (for example, shortened TTI or the like) may be read as TTI having a TTI length less than the TTI length of long TTI and equal to or more than 1 ms.

The resource block (RB) is a resource allocation unit in the time domain and the frequency domain, and may include one or more continuous subcarriers in the frequency domain. The number of subcarriers included in RB may be the same regardless of numerology, for example, twelve. The number of subcarriers included in RB may be determined on the basis of numerology.

Further, the time domain of RB may include one or more symbols, and may have a length of one slot, one minislot, one subframe, or 1 TTI. 1 TTI, one subframe, or the like may be configured by one or more resource blocks.

Note that one or more RBs may be called a physical resource block (Physical RB: PRB), a subcarrier group (Sub-Carrier Group: SCG), a resource element group (Resource Element Group: REG), a PRB pair, an RB pair, or the like.

Further, the resource block may be configured by one or more resource elements (RE). For example, 1RE may be a radio resource region of one subcarrier and one symbol.

A bandwidth part (BWP) (may be called a partial bandwidth or the like) may represent a subset of consecutive common resource blocks (RBs) for certain numerology in a certain carrier. Here, the common RB may be specified by an index of RB based on a common reference point of the carriers. PRB may be defined by certain BWP, and may be numbered within BWP.

BWP may include BWP for UL (UL BWP) and BWP for DL (DL BWP). For UE, one or more BWPs may be set in one carrier.

At least one of set BWPs may be active, and UE may not assume that a predetermined signal/channel is transmitted and received outside active BWP. Note that the "cell", the "carrier", and the like in the present disclosure may be read as "BWP".

The above-described structures such as the radio frame, the subframe, the slot, the minislot, and the symbol are merely examples. For example, the structures such as the number of subframes included in the radio frame, the number of slots per subframe or radio frame, the number of minislots included in the slot, the number of symbols and RBs included in the slot or minislot, the number of subcarriers included in RB, the number of symbols in TTI, the symbol length, the cyclic prefix (CP) length, and the like can be variously changed.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using at least one of one or more wires, cables, and printed electrical connections, and as some non-limiting and non-exhaustive examples, by using electromagnetic energy having wavelengths in the radio frequency domain, the microwave region, and light (both visible and invisible) region, and the like.

The reference signal may be abbreviated as RS and may be called pilot according to applicable standards.

As used in the present disclosure, the phrase "based on" does not mean "based only on" unless explicitly stated otherwise. In other words, the phrase "based on" means both "based only on" and "based at least on".

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as "a", "an", and "the" in English are added, in the present disclosure, these articles may include a plurality of nouns following these articles.

The terms "determining" and "determining" used in the present disclosure may include a wide variety of operations. In "determining" and "deciding", for example, judging, calculating, computing, processing, deriving, investigating, looking up (search or inquiry) (for example, searching in a table, database, or other data structure), and ascertaining may be considered as "determining" and "deciding". Further, in "determining" and "deciding", receiving (for example, receiving information), transmitting (for example, transmitting information), input, output, and accessing (for example, accessing data in a memory) may be considered as "determining" and "deciding". Further, in "determining" and "deciding", "resolving", "selecting", "choosing", "establishing", and "comparing" may be considered as "determining" and "deciding". In other words, in "determining" and "deciding", any operation may be considered as "determining" and "deciding". Further, "determining (deciding)" may be read as "assuming", "expecting", "considering", and the like.

In the present disclosure, the term "A and B are different" may mean "A and B are different from each other". Note that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the scope of the present disclosure as defined by the claims. Therefore, the description of the present disclosure is for the purpose of illustration, and does not have any restrictive meaning to the present disclosure.

### EXPLANATION OF REFERENCE NUMERALS

10 Radio communication system
20 5G-CN
100a, 100b Communication node
101 Transmitting unit
103 Receiving unit
105 Beam control unit
107 Processing unit
109 Holding unit
111 Control unit
200 Terminal
201 Transmitting unit
203 Receiving unit
205 Reception quality measurement unit
207 Layer 1 processing unit
209 Layer 3 processing unit
211 Holding unit
213 Control unit
1001 Processor
1002 Memory
1003 Storage
1004 Communication device
1005 Input device
1006 Output device
1007 Bus

## Claims

1. A terminal (200) comprising:
a receiving unit (203) configured to receive a reference signal;
a control unit (213) configured to acquire a weighted average of layer 1 reception qualities of the reference signal, the layer 1 reception qualities being measured within a measurement period, wherein the terminal (200) is configured to multiply each of the layer 1 reception qualities of the reference signal by a weighting coefficient, thereby acquiring the weighted average of the layer 1 reception qualities of the reference signal; and
a transmitting unit (201) configured to transmit the acquired weighted average to a data server (300) via a communication node (100a, 100b),
wherein the control unit (213) is configured to set the weighting coefficient so that the weighting coefficient applied to a reception quality measured at a timing close to a transmission timing of the weighted average is greater than the weighting coefficient applied to a reception quality measured at a timing far from the transmission timing.

2. The terminal (200) according to claim 1, wherein
the receiving unit (203) is configured to receive different reference signals, and
the control unit (213) is configured to acquire, for each reference signal, an average of layer 1 reception qualities of the reference signal, the layer 1 reception qualities being measured within the measurement period.

3. The terminal (200) according to claim 2, wherein
the control unit (213) is configured to determine an average indicating a best quality among averages of layer 1 reception qualities of the reference signals, and
the transmitting unit (201) is configured to transmit the determined average to the data server (300) via the communication node (100a, 100b).

4. The terminal (200) according to claim 1, wherein
the receiving unit (203) is configured to receive, from the communication node (100a, 100b), a RRC message to notify the terminal (200) of a timing and a channel for transmitting the average.

5. The terminal (200) according to claim 1, wherein
the transmitting unit (201) is configured to transmit resource information of the reference signal to the data server (300) via the communication node (100a, 100b), wherein the reference signal is a channel state information reference signal, CSI-RS.

6. A radio communication method comprising:
a step of receiving a reference signal;
a step of acquiring a weighted average of layer 1 reception qualities of the reference signal, the layer 1 reception qualities being measured within a measurement period, wherein the step of acquiring the weighted average includes multiplying each of the layer 1 reception qualities of the reference signal by a weighting coefficient, thereby acquiring the weighted average of the layer 1 reception qualities of the reference signal; and
a step of transmitting the acquired weighted average to a data server (300) via a communication node (100a, 100b),
wherein the step of acquiring a weighted average comprises setting the weighting coefficient so that the weighting coefficient applied to a reception quality measured at a timing close to a transmission timing of the weighted average is greater than the weighting coefficient applied to a reception quality measured at a timing far from the transmission timing.

7. A communication node (100a, 100b) comprising:
a transmitting unit (101) configured to transmit a reference signal; and
a receiving unit (103) configured to receive, from a terminal (200), a weighted average of layer 1 reception qualities of the reference signal, the layer 1 reception qualities being measured within a measurement period, wherein each of the layer 1 reception qualities of the reference signal is multiplied by a weighting coefficient, thereby acquiring the weighted average of the layer 1 reception qualities of the reference signal, by the terminal (200),
wherein the transmitting unit (101) is configured to transmit the received weighted average to a data server (300) as trace information of the terminal (200),
wherein the weighting coefficient is set so that the weighting coefficient applied to a reception quality measured at a timing close to a transmission timing of the weighted average is greater than the weighting coefficient applied to a reception quality measured at a timing far from the transmission timing.

8. A radio communication system (10) comprising:
a terminal (200);
a communication node (100a, 100b) connected to the terminal (200); and
a data server (300) connected to the communication node (100a, 100b),
wherein the terminal (200) includes:
a receiving unit (203) configured to receive a reference signal;
a control unit (213) configured to acquire a weighted average of layer 1 reception qualities of the reference signal, the layer 1 reception qualities being measured within a measurement period, wherein the terminal (200) is configured to multiply each of the layer 1 reception qualities of the reference signal by a weighting coefficient, thereby acquiring the weighted average of the layer 1 reception qualities of the reference signal; and
a transmitting unit (201) configured to transmit the acquired weighted average to the communication node (100a, 100b),
wherein the control unit (213) is configured to set the weighting coefficient so that the weighting coefficient applied to a reception quality measured at a timing close to a transmission timing of the weighted average is greater than the weighting coefficient applied to a reception quality measured at a timing far from the transmission timing,
the communication node (100a, 100b) includes:
a transmitting unit (101) configured to transmit the reference signal; and
a receiving unit (103) configured to receive the weighted average from the terminal (200), and
the transmitting unit (101) of the communication node (100a, 100b) configured to transmit the received weighted average to the data server (300) as trace information of the terminal (200).

## Patentansprüche

1. Endgerät (200), umfassend:
eine Empfangseinheit (203), die dazu ausgebildet ist, ein Referenzsignal zu empfangen;
eine Steuereinheit (213), die dazu ausgebildet ist, einen gewichteten Mittelwert von Schicht-1-Empfangsqualitäten des Referenzsignals zu ermitteln, wobei die Schicht-1-Empfangsqualitäten innerhalb eines Messzeitraums gemessen werden, wobei das Endgerät (200) dazu ausgebildet ist, jede der Schicht-1-Empfangsqualitäten des Referenzsignals mit einem Gewichtungskoeffizienten zu multiplizieren und dadurch den gewichteten Mittelwert der Schicht-1-Empfangsqualitäten des Referenzsignals zu ermitteln; und
eine Übertragungseinheit (201), die dazu ausgebildet ist, den ermittelten gewichteten Mittelwert über einen Kommunikationsknoten (100a, 100b) an einen Datenserver (300) zu übertragen,
wobei die Steuereinheit (213) dazu ausgebildet ist, den Gewichtungskoeffizienten festzulegen, sodass der Gewichtungskoeffizient, der auf eine Empfangsqualität angewendet wird, die zu einem Zeitpunkt nahe einem Übertragungszeitpunkt des gewichteten Mittelwerts gemessen wird, größer ist als der Gewichtungskoeffizient, der auf eine Empfangsqualität angewendet wird, die zu einem Zeitpunkt fern von dem Übertragungszeitpunkt gemessen wird.

2. Endgerät (200) nach Anspruch 1, wobei
die Empfangseinheit (203) dazu ausgebildet ist, unterschiedliche Referenzsignale zu empfangen, und
die Steuereinheit (213) dazu ausgebildet ist, für jedes Referenzsignal einen Mittelwert von Schicht-1-Empfangsqualitäten des Referenzsignals zu ermitteln, wobei die Schicht-1-Empfangsqualitäten innerhalb des Messzeitraums gemessen werden.

3. Endgerät (200) nach Anspruch 2, wobei
die Steuereinheit (213) dazu ausgebildet ist, einen Mittelwert zu ermitteln, der eine beste Qualität unter Mittelwerten von Schicht-1-Empfangsqualitäten der Referenzsignale angibt, und
die Übertragungseinheit (201) dazu ausgebildet ist, den ermittelten Mittelwert über den Kommunikationsknoten (100a, 100b) an den Datenserver (300) zu übertragen.

4. Endgerät (200) nach Anspruch 1, wobei
die Empfangseinheit (203) dazu ausgebildet ist, von dem Kommunikationsknoten (100a, 100b) eine RRC-Nachricht zu empfangen, um dem Endgerät (200) einen Zeitpunkt und einen Kanal zum Übertragen des Mittelwerts mitzuteilen.

5. Endgerät (200) nach Anspruch 1, wobei
die Übertragungseinheit (201) dazu ausgebildet ist, Ressourceninformation des Referenzsignals über den Kommunikationsknoten (100a, 100b) an den Datenserver (300) zu übertragen, wobei das Referenzsignal ein Channel-State-Information-Referenzsignal, CSI-RS, ist.

6. Funkkommunikationsverfahren, umfassend:
einen Schritt des Empfangens eines Referenzsignals;
einen Schritt des Ermittelns eines gewichteten Mittelwerts von Schicht-1-Empfangsqualitäten des Referenzsignals, wobei die Schicht-1-Empfangsqualitäten innerhalb eines Messzeitraums gemessen werden, wobei der Schritt des Ermittelns des gewichteten Mittelwerts das Multiplizieren jeder der Schicht-1-Empfangsqualitäten des Referenzsignals mit einem Gewichtungskoeffizienten einschließt und dadurch den gewichteten Mittelwert der Schicht-1-Empfangsqualitäten des Referenzsignals ermittelt; und
einen Schritt des Übertragens des ermittelten gewichteten Mittelwerts über einen Kommunikationsknoten (100a, 100b) an einen Datenserver (300),
wobei der Schritt des Ermittelns eines gewichteten Mittelwerts das Festlegen des Gewichtungskoeffizienten umfasst, sodass der Gewichtungskoeffizient, der auf eine Empfangsqualität angewendet wird, die zu einem Zeitpunkt nahe einem Übertragungszeitpunkt des gewichteten Mittelwerts gemessen wird, größer ist als der Gewichtungskoeffizient, der auf eine Empfangsqualität angewendet wird, die zu einem Zeitpunkt fern von dem Übertragungszeitpunkt gemessen wird.

7. Kommunikationsknoten (100a, 100b), umfassend:
eine Übertragungseinheit (101), die dazu ausgebildet ist, ein Referenzsignal zu übertragen; und
eine Empfangseinheit (103), die dazu ausgebildet ist, von einem Endgerät (200) einen gewichteten Mittelwert von Schicht-1-Empfangsqualitäten des Referenzsignals zu empfangen, wobei die Schicht-1-Empfangsqualitäten innerhalb eines Messzeitraums gemessen werden, wobei jede der Schicht-1-Empfangsqualitäten des Referenzsignals mit einem Gewichtungskoeffizienten multipliziert und dadurch der gewichtete Mittelwert der Schicht-1-Empfangsqualitäten des Referenzsignals durch das Endgerät (200) ermittelt wird,
wobei die Übertragungseinheit (101) dazu ausgebildet ist, den empfangenen gewichteten Mittelwert als Trace-Informationen des Endgeräts (200) an einen Datenserver (300) zu übertragen,
wobei der Gewichtungskoeffizient so festgelegt ist, dass der Gewichtungskoeffizient, der auf eine Empfangsqualität angewendet wird, die zu einem dem Übertragungszeitpunkt des gewichteten Mittelwerts nahen Zeitpunkt gemessen wird, größer ist als der Gewichtungskoeffizient, der auf eine Empfangsqualität angewendet wird, die zu einem dem Übertragungszeitpunkt fernen Zeitpunkt gemessen wird.

8. Funkkommunikationssystem (10), umfassend:
ein Endgerät (200);
einen Kommunikationsknoten (100a, 100b), der mit dem Endgerät (200) verbunden ist; und
einen Datenserver (300), der mit dem Kommunikationsknoten (100a, 100b) verbunden ist,
wobei das Endgerät (200) einschließt:
eine Empfangseinheit (203), die dazu ausgebildet ist, ein Referenzsignal zu empfangen;
eine Steuereinheit (213), die dazu ausgebildet ist, einen gewichteten Mittelwert von Schicht-1-Empfangsqualitäten des Referenzsignals zu ermitteln, wobei die Schicht-1-Empfangsqualitäten innerhalb eines Messzeitraums gemessen werden, wobei das Endgerät (200) dazu ausgebildet ist, jede der Schicht-1-Empfangsqualitäten des Referenzsignals mit einem Gewichtungskoeffizienten zu multiplizieren und dadurch den gewichteten Mittelwert der Schicht-1-Empfangsqualitäten des Referenzsignals zu ermitteln; und
eine Übertragungseinheit (201), die dazu ausgebildet ist, den ermittelten gewichteten Mittelwert an den Kommunikationsknoten (100a, 100b) zu übertragen,
wobei die Steuereinheit (213) dazu ausgebildet ist, den Gewichtungskoeffizienten festzulegen, sodass der Gewichtungskoeffizient, der auf eine Empfangsqualität angewendet wird, die zu einem Zeitpunkt nahe einem Übertragungszeitpunkt des gewichteten Mittelwerts gemessen wird, größer ist als der Gewichtungskoeffizient, der auf eine Empfangsqualität angewendet wird, die zu einem Zeitpunkt fern von dem Übertragungszeitpunkt gemessen wird,
wobei der Kommunikationsknoten (100a, 100b) einschließt:
eine Übertragungseinheit (101), die dazu ausgebildet ist, das Referenzsignal zu übertragen; und
eine Empfangseinheit (103), die dazu ausgebildet ist, den gewichteten Mittelwert von dem Endgerät (200) zu empfangen, und
die Übertragungseinheit (101) des Kommunikationsknotens (100a, 100b), die dazu ausgebildet ist, den empfangenen gewichteten Mittelwert als Trace-Informationen des Endgeräts (200) an den Datenserver (300) zu übertragen.

## Revendications

1. Terminal (200) comprenant :
une unité de réception (203) configurée pour recevoir un signal de référence ;
une unité de commande (213) configurée pour acquérir une moyenne pondérée de qualités de réception de couche 1 du signal de référence, les qualités de réception de couche 1 étant mesurées au cours d'une période de mesure, dans lequel le terminal (200) est configuré pour multiplier chacune des qualités de réception de couche 1 du signal de référence par un coefficient de pondération, acquérant ainsi la moyenne pondérée des qualités de réception de couche 1 du signal de référence ; et
une unité de transmission (201) configurée pour transmettre la moyenne pondérée acquise à un serveur de données (300) via un nœud de communication (100a, 100b),
dans lequel l'unité de commande (213) est configurée pour définir le coefficient de pondération de sorte que le coefficient de pondération appliqué à une qualité de réception mesurée à un instant proche d'un instant de transmission de la moyenne pondérée est supérieur au coefficient de pondération appliqué à une qualité de réception mesurée à un instant éloigné de l'instant de transmission.

2. Terminal (200) selon la revendication 1, dans lequel
l'unité de réception (203) est configurée pour recevoir différents signaux de référence, et
l'unité de commande (213) est configurée pour acquérir, pour chaque signal de référence, une moyenne de qualités de réception de couche 1 du signal de référence, les qualités de réception de couche 1 étant mesurées au cours de la période de mesure.

3. Terminal (200) selon la revendication 2, dans lequel
l'unité de commande (213) est configurée pour déterminer une moyenne indiquant une meilleure qualité parmi des moyennes de qualités de réception de couche 1 des signaux de référence, et
l'unité de transmission (201) est configurée pour transmettre la moyenne déterminée au serveur de données (300) via le nœud de communication (100a, 100b).

4. Terminal (200) selon la revendication 1, dans lequel
l'unité de réception (203) est configurée pour recevoir, depuis le nœud de communication (100a, 100b), un message RRC pour notifier au terminal (200) un instant et un canal pour transmettre la moyenne.

5. Terminal (200) selon la revendication 1, dans lequel
l'unité de transmission (201) est configurée pour transmettre des informations de ressource du signal de référence au serveur de données (300) via le nœud de communication (100a, 100b), dans lequel le signal de référence est un signal de référence d'informations d'état de canal, CSI-RS.

6. Procédé de communication radio comprenant :
une étape de réception d'un signal de référence ;
une étape d'acquisition d'une moyenne pondérée de qualités de réception de couche 1 du signal de référence, les qualités de réception de couche 1 étant mesurées au cours d'une période de mesure, dans lequel l'étape d'acquisition de la moyenne pondérée inclut la multiplication de chacune des qualités de réception de couche 1 du signal de référence par un coefficient de pondération, acquérant ainsi la moyenne pondérée des qualités de réception de couche 1 du signal de référence ; et
une étape de transmission de la moyenne pondérée acquise à un serveur de données (300) via un nœud de communication (100a, 100b),
dans lequel l'étape d'acquisition d'une moyenne pondérée comprend la définition du coefficient de pondération de sorte que le coefficient de pondération appliqué à une qualité de réception mesurée à un instant proche d'un instant de transmission de la moyenne pondérée est supérieur au coefficient de pondération appliqué à une qualité de réception mesurée à un instant éloigné de l'instant de transmission.

7. Nœud de communication (100a, 100b) comprenant :
une unité de transmission (101) configurée pour transmettre un signal de référence ; et
une unité de réception (103) configurée pour recevoir, depuis un terminal (200), une moyenne pondérée de qualités de réception de couche 1 du signal de référence, les qualités de réception de couche 1 étant mesurées au cours d'une période de mesure,
dans lequel chacune des qualités de réception de couche 1 du signal de référence est multipliée par un coefficient de pondération, acquérant ainsi la moyenne pondérée des qualités de réception de couche 1 du signal de référence, par le terminal (200),
dans lequel l'unité de transmission (101) est configurée pour transmettre la moyenne pondérée reçue à un serveur de données (300) en tant qu'informations de trace du terminal (200),
dans lequel le coefficient de pondération est défini de sorte que le coefficient de pondération appliqué à une qualité de réception mesurée à un instant proche d'un instant de transmission de la moyenne pondérée est supérieur au coefficient de pondération appliqué à une qualité de réception mesurée à un instant éloigné de l'instant de transmission.

8. Système (10) de communication radio comprenant :
un terminal (200) ;
un nœud de communication (100a, 100b) connecté au terminal (200) ; et
un serveur de données (300) connecté au nœud de communication (100a, 100b),
dans lequel le terminal (200) inclut :
une unité de réception (203) configurée pour recevoir un signal de référence ;
une unité de commande (213) configurée pour acquérir une moyenne pondérée de qualités de réception de couche 1 du signal de référence, les qualités de réception de couche 1 étant mesurées au cours d'une période de mesure, dans lequel le terminal (200) est configuré pour multiplier chacune des qualités de réception de couche 1 du signal de référence par un coefficient de pondération, acquérant ainsi la moyenne pondérée des qualités de réception de couche 1 du signal de référence ; et
une unité de transmission (201) configurée pour transmettre la moyenne pondérée acquise au nœud de communication (100a, 100b),
dans lequel l'unité de commande (213) est configurée pour définir le coefficient de pondération de sorte que le coefficient de pondération appliqué à une qualité de réception mesurée à un instant proche d'un instant de transmission de la moyenne pondérée est supérieur au coefficient de pondération appliqué à une qualité de réception mesurée à un instant éloigné de l'instant de transmission,
le nœud de communication (100a, 100b) inclut :
une unité de transmission (101) configurée pour transmettre le signal de référence ; et
une unité de réception (103) configurée pour recevoir la moyenne pondérée depuis le terminal (200), et
l'unité de transmission (101) du nœud de communication (100a, 100b) configurée pour transmettre la moyenne pondérée reçue au serveur de données (300) en tant qu'informations de trace du terminal (200).
